# EUROPÄISCHE PATENTANMELDUNG

(11) **EP 0 838 783 A2**
(43) Veröffentlichungstag der Anmeldung: **29.04.1998**
(21) Anmeldenummer: 97250316.3
(22) Anmeldetag: 23.10.1997
(51) Int. Cl.: G06T 9/40

(54) **Verfahren zur Verwaltung und Bearbeitung von Plänen, Zeichnungen und Karten**

(30) Priorität: 24.10.1996 DE 19645141
(71) Anmelder: FlexiCon GmbH Prozessautomatisierung, 12439 Berlin (DE)
(72) Erfinder: Weide, Hans-Günter, Dr., 12623 Berlin (DE); Weckend, Fank, Dr., 12589 Berlin (DE)
(74) Vertreter: Hengelhaupt, Jürgen, Dipl.-Ing.

(57) **Zusammenfassung**

Die Erfindung beschreibt ein Verfahren zur Verwaltung und Bearbeitung von Plänen, Zeichnungen und Karten wie Stadtplänen, Landkarten, Leitungsnetzplänen etc, wobei die Informationen in digitalisierter Form vorliegen und ein schematisches Gesamtbild mit wenigen ausgewählten Überblicksinformationen erstellt wird, dieses schematische Gesamtbild in ein Raster eingeteilt wird, die durch das Raster gebildeten Flächen als Einzelbilder mit allen Detailinformationen abgespeichert werden, die Bearbeitung jeweils an einem oder an mehreren aneinandergrenzenden Einzelbildern vorgenommen wird und die bearbeiteten Einzelbilder wieder separat gespeichert werden.

## Beschreibung

Die Erfindung betrifft ein Verfahren zur Verwaltung und Bearbeitung von Plänen, Zeichnungen und Karten und ist anwendbar insbesondere zum Aktualisieren von Stadtplänen, Landkarten und Leitungsnetzplänen.

In der rechnergestüzten Verwaltung von Objekten wie Werken, Städten, Gebäuden sowie Leitungssystemen bis hin zu Verkehrsnetzen gibt es gemäß dem bekannten Stand der Technik ein einheitliches Vorgehen, das darin besteht, daß die jeweilig einzeln digitalisiert vorliegenden Bildausschnitte zu einem Gesamtbild zusammengefügt werden und so den Gesamtüberblick für das zu verwaltende Objekt wiedergeben. Für die rein graphische Bearbeitung dieser Bilder werden die jeweiligen interessierenden, in der Regel kleineren Gebiete aufgezoomt und herausgelöst oder im Bild bearbeitet und der bearbeitete Teil in die Gesamtzeichnung zurückgeschrieben. Dieses Vorgehen wird als blattschnittlose Verarbeitung gekennzeichnet.

Diese weltweit eingeführte Verarbeitungspraxis verlangt entsprechend dem Inhalt der Zeichnungen, Pläne und Dokumente, die zu dem Gesamtbild zusammengefügt wurden, eine angepaßte Rechnerkapazität, insbesondere bezüglich der Größe des Hauptspeichers und der Schnelligkeit der Verarbeitung.

Die für die Bearbeitung benötigten Rechnerkapazitäten erreichen in der Regel sehr schnell Grenzen, die die Leistungsgrenze der jeweiligen Rechnerklasse wie PC, Workstation, Main-Frame-Rechner übersteigen. So führt z.B. die Vereinigung von im Maßstab 1:500 aufgezeichneter Stadtkarten mit Leitungsinhalten bereits bei ca. 30 zusammengelegten Karten zum Versagen eines leistungsfähigen PC-Netzes für die Routinearbeit. Das heißt, die Einlad- und Aufrufzeiten werden so groß, so daß eine effektive Bearbeitung dieser Karten nicht möglich ist.

Weitere Erfahren haben gezeigt, daß allein ca. dreißig 1:500 Bilder für ein größeres Chemiewerk mit Leitungsinformationen, in verschiedene Fachbereichsschlüssel unterteilt, auch die Kapazität eines modernen Workstationnetzes übersteigen, so daß eine Bearbeitung dieses zusammengesetzten Kartenmaterials nicht mehr möglich ist.

Zur Lösung dieses Problems müßte auf die nächst höhere Leistungsklasse der Rechner übergegangen werden, um diese Pläne nach der herkömmlichen Technik und Technologie zu bearbeiten.

Die in der bisherigen Bildverarbeitung von digitalisierten Bildern übliche Technologie der blattschnittlosen Verwaltung eingesetzte Technik des Zusammenkopierens aller vorhandenen Objektbilder zu einem Ganzen führt somit in diesem technologischen Schritt zu einer extrem hohen Anforderung an die Rechentechnik. Im Gegensatz dazu bedarf die eigentliche Arbeit mit den Bildern nur eines kleinen Ausschnittes aus diesem Ganzen, der beim gegenwärtigen Stand der Technik durch Ausschnittsvergrößerungen, in der Regel herauskopieren, erzeugt wird. Für die zu bearbeitenden Ausschnitte, die aus technologischen Gründen häufig sehr klein sind, können leistungsfähige PC-Rechensysteme effektiv und kostengünstig eingesetzt werden.

Die gemäß dem Stand der Technik bekannte Technologie des Zusammenfassens zu einem Gesamtbild mit allen Informationen, aus denen diese kleinen zu bearbeitenden Ausschnitte herauskopiert werden, begrenzt jedoch die Einsatzfähigkeit von preisgünstigen PC- oder Workstationssystemen.

Aus diesem Grund ist der Einsatz von kostengünstigen und effektiven PC-Netzen für Aufgaben einer zentralen Bildverarbeitung mit nachfolgender Informationsverarbeitung (graphische Informationssysteme) trotz Leistungsfähigkeit und Preisvorteil bisher nicht möglich.

In der WO 88/09974 wird ein Verfahren und eine Vorrichtung zur Bestimmung einer Fahrtroute zwischen einem Startpunkt und einem Zielpunkt beschrieben, mit welchen logische Verknüpfungen zwischen Karten mit hohem Informationsgehalt (Einzel-/Detailkarte) und niedrigem Informationsgehalt (Überblicksbild) hergestellt werden. Diese Verknüpfungen dienen dazu, einen unter bestimmten Wichtungen optimalen Weg zu finden. Nachteilig bei diesen Lösungen ist, daß die logische und praktische Verbindung zwischen verschiedenen Bereichen der unteren Ebenen ausschließlich über die höhere Ebene führt, d.h. um von einer Detailkarte zu einer anderen zu kommen, muß erst die Übersichtskarte geöffnet werden. Die höhere Ebene hat damit nicht nur Überblickscharakter, sondern ist auch für die Funktion des Gesamtsystems zwingend notwendig.

Der Erfindung liegt daher die Aufgabe zugrunde, ein Verfahren zur Verwaltung und Bearbeitung von Plänen, Zeichnungen und Karten zu schaffen, welches einfach und rationell durchfuhrbar ist. Es ist weiterhin Aufgabe der Erfindung, die jeweils einfachste Leistungsklasse von Rechnersystemen, die für die Detailbearbeitung notwendig sind, einsetzen zu können und nicht durch die Anforderungen an die Verarbeitung eines Gesamtbildes, das mit allen Informationsinhalten die Leistungsgrenze dieser Rechnerklasse sprengt, gebunden zu sein, ohne jedoch den notwendigen Gesamtüberblick über das zu verwaltende Objekt zu verlieren.

Diese Aufgabe wird erfindungsgemäß gelöst durch die Merkmale im kennzeichnenden Teil des Anspruches 1 in Verbindung mit den Merkmalen im Oberbegriff. Zweckmäßige Ausgestaltungen der Erfindung sind in den Unteransprüchen enthalten.

Ein besonderer Vorteil der Erfindung besteht darin, daß auch für sehr umfangreiche Gesamtbilder zur Verwaltung und Bearbeitung PC-Netze eingesetzt werden können, da im Gegensatz zur bekannten Technik, der sogenannten blattschnittlosen Verarbeitung, kein Gesamtbild aus den einzelnen Detailbildern eines Objektes zusammengesetzt wird, sondern das für die Übersichtszwecke ein schematisiertes, gering informationsvolumiges Gesamtbild dargestellt wird, das in ein für den Nutzer geeignetes Raster eingeteilt ist. Bei dem erfindungsgemäßen Verfahren geht es um die Verwaltung und die Möglichkeit der blattschnittlosen Bearbeitung (z.B. Kartierung) und Verwaltung von Plänen (Karten), wobei hier unter blattschnittloser Verwaltung verstanden wird, daß die Logik und der Zusammenhang von Objekten (z.B. Häuser, Straßen, Leitungen) nicht an relativ willkürlich erzeugten Grenzen (Blattschnitt) unterbrochen wird. Die blattschnittlose Bearbeitung ermöglicht die Erfassung und Bearbeitung von Objekten ohne Beachtung des Blattschnitts.
Die Überblickskarte dient in dem vorliegenden Verfahren ausschließlich der Orientierung im Gelände, der Inhalt kann willkürlich festgelegt werden. Durch die Möglichkeit des temporären Zusammenfügens von Karten der unteren Ebene werden die Karten logisch und praktisch miteinander verknüpft. Dabei werden jedoch maximal soviel benachbarte Karten zusammengefügt, daß die Kapazität des Arbeitsspeichers eines PC nicht überstiegen wird. Damit besteht die o.a. Möglichkeit der blattschnittlosen Bearbeitung. Durch das anschließende erfindungsgemäße Teilen des temporären Bildes wird gesichert, daß die einzelnen Karten wieder den vollständigen grafischen und logischen Inhalt besitzen.

Das erfindungsgemäße Verfahren wird in einzelnen Verfahrensschritten realisiert, indem rechnergestützt ein schematisches Gesamtbild mit wenigen ausgewählten Überblicksinfomationen erstellt wird, dieses schematische Gesamtbild in ein Raster eingeteilt wird, die durch das Raster gebildeten Flächen als Einzelbilder mit allen Detailinformationen abgespeichert werden, die Bearbeitung jeweils an einem oder an mehreren aneinandergrenzenden Einzelbildern vorgenommen wird und die bearbeiteten Einzelbilder wieder separat gespeichert werden.

Ein weiterer Vorteil des Verfahrens besteht zusammengefaßt darin, daß sich sämtliche benötigten und vorhandenen Informationen in einer Ebene befinden, sie bildet praktisch das Original aus mosaikartigen Rasterflächen. Alle anderen Ebenen (z.B. Überblicksbilder) werden aus dieser prinzipiell temporär generiert. Sie dienen nur zur Orientierung, in ihnen werden keine Operationen ausgeführt. Zur Lösung von Routingproblemen gemäß dem Stand der Technik müssen verfahrensbedingt beide Ebenen aktiv in die Berechnungen einbezogen werden. Weiterhin werden im erfindungsgemäßen System beim Aufruf der Originalrasterbilder je nach Anforderung nur Teilinformationen geladen und eventuell zusammengefügt. Für Routingprobleme gemäß dem Stand der Technik müssen alle Informationen einer Ebene geladen werden, da sie für die Berechnungen notwendig sind.

Im erfindungsgemäßen System werden alle Veränderungen in den Daten ausschließlich in der Originalebene durchgeführt und gespeichert.

Da die zu dem Gesamtobjekt gehörenden Einzelbilder in dem jeweilig gewählten Maßstab im Gegensatz zur bisherigen Technik als Einzelbilder und damit mit einer begrenzten Kapazitätsanforderung einzeln abgespeichert werden, wird zwar etwas mehr Speicherplatz für die jeweiligen Einzelbilder benötigt, dieser ist aber in der modernen Technik heute problemlos verfügbar.

Die rechnergestutzte Bearbeitung eines Ausschnittes aus einem in digitalisierter Form vorliegenden Gesamtbild erfolgt nun derart, daß auf dem Übersichtsbild das jeweilige Raster angeklickt wird und automatisch das dazugehörige Teilbild mit den ausgewählten Informationen in den Rechner geladen wird. Wird die Verbindung zwischen zwei Rastern gewünscht und auf diese Stelle mit dem Cursor aktiviert, werden zwei Bilder automatisch in den Rechner geladen und ebenfalls automatisch mit einander verbunden, so daß ein geschlossenes Bild entsteht. Diese Prozedur kann auf bis zu neun oder mehr Bilder ausgedehnt werden, wenn ein bestimmtes Objekt diese Verbindung verlangt. Nach der Bearbeitung dieses begrenzten Informationsteils, das der Leistungsklasse der jeweiligen Rechner optimal angepaßt ist, werden die einzelnen Bilder wieder automatisch getrennt und entsprechend der Rasterung in den Speicher zurückgeschrieben.

Es ist möglich, einzelne Verfahrensschritte zu automatisieren. Dies können sein:
I. Automatisches Aufteilen eines vorhandenen Großbildes, welches entweder das schematische Gesamtbild mit ausgewählten Überblicksinformationen oder ein Bild mit vollständigem Informationsgehalt ist, in ein vorgegebenes Rastermuster, dessen Größe nutzerdefiniert gewählt werden kann.
   Die Raster können mit einer nutzenspezifischen Nomenklatur bezeichnet werden.
II. Automatisches Laden eines Rasterbildes mit vollen Informationen nach Anklicken eines Rasterfeldes auf dem Bildschirm.
   Automatisches Laden von zwei- und mehreren Detailbildern nach Anklicken des Raster auf dem Bildschirm bei rasterübergreifender Bearbeitung von Details und automatisches Verknüpfen der Bilder mit Abstimmen der jeweiligen Unterlagenartenschlüssel und Referenzen.
III. Beim Speichern automatisches Trennen in die vorgegebenen Raster und Zurückschreiben der einzelnen getrennten Bilder auf ihre eigenen Speicherplätze.
IV. Automatisches Zusammenstellen zu einem Gesamtbild von Informationsauszügen aus allen Einzelbildern, die einem einzelnen Unterlagenartenschlüssel, einer Ebene oder anderen gemeinsamen auswählbaren Merkmalen entsprechen. (So könnten z.B. die Straßen des gesamtes Objektes dargestellt werden. Nur allein die Straßen überschreiten in ihrer Informationsvielfalt nicht die Leistungsklasse eines Rechners, wenn eine mittlere Großstadt zu Grunde gelegt wird.).

Die Erfindung soll nachstehend anhand von Ausführungsbeispielen näher erläutert werden.

Es liegt ein großer Gesamtbildfile vor, der auf Grund seiner Größe die jeweils vorhandene Rechnerkapazität überschreitet und nicht mehr handhabbar ist. Es wird nun ein schematisches Gesamtbild mit einigen wenigen ausgewählten Überblicksinformationen erstellt und dieses und/oder das Gesamtbildfile manuell oder automatisch in Raster unterteilt, deren Größe vorgegeben werden kann. Wird zum Beispiel eine Stadtkarte mit einem Raster von 1:500 Maßstab überzogen, deren Inhalt einer A1 Zeichnungsgröße entspricht, werden aus dem Gesamtfile entsprechend der Rasterung einzelne Files erzeugt, die unter eigenem Namen getrennt abgelegt werden.

Durch die weitere Bearbeitung wird die Vereinigung des Gesamtbildes nach einem Unterlagenartenschlüssel realisiert, so daß beispielsweise ausschließlich die Straßenzüge enthalten sind. Dies ist die Basis für die Übersichtskarte, die mit der Rasterung ergänzt wird und die Namensflächen der jeweiligen Rasterelemente enthält. In dieser Übersichtskarte werden die Rasterelemente mit Aktivflächen versehen, die aktiviert werden können.

Nach Aktivierung der Aktivflächen können die jeweiligen Detailkarten in den Rechner geladen werden bzw. bei Anklicken eines Grenzbereiches zwischen zwei Rasterelemtenten beide Karten oder, wenn gewünscht mehrere Karten gleichzeitig in den Rechner geladen und vereinigt werden. Diese, jetzt in der Größenordnung dem Rechnersystem angepaßte Bildvorlage, kann effektiv bearbeitet, geändert oder ergänzt werden und wird beim Abspeichern in diesem Ausführungsbeispiel automatisch wieder in die vorgegebene Rastergröße getrennt und mit eigenem Namen entsprechend der Rastereinteilung abgespeichert.

Mit diesem Verfahren liegt somit immer nur ein Bildverarbeitungsbereich zur Bearbeitung im Rechner vor, der die Leistungsfähigkeit der vorgegebenen Rechnerklasse nicht übersteigt. Trotzdem läßt sich mit diesem Verfahren effektiv ein sehr großes Gebiet, das im zusammengesetzten Zustand von dieser Rechnerklasse nicht zu bearbeiten wäre, effektiv, organisatorisch, rechnergestützt verwalten.

Gemäß einem weiteren Ausführungsbeispiel liegt noch kein geschlossener Gesamtbildfile vor, sondern es werden erst Einzelbilder nach vorliegenden Maßstäben und Größeneinteilungen digitalisiert bzw. aufgebaut. In diesem Fall werden die einzelnen Rasterbildgrößen mit einem vorgegebenen Namenskodex einzeln abgespeichert. Liegen dann die abgespeicherten Bilder weitgehend vollständig vor, werden zur Vereinigung eines Unterlagenartenschlüssels wieder z.B. die Straßenkonturen für das Gesamtbild vereinigt und als Grundlage für den Übersichtsplan mit der vorgegebenen Rasterung benutzt. Rasterübersichtsplan und Bezeichnung werden dann in diesem Ausführungsbeispiel automatisch generiert.

Die weitere Verfahrensweise erfolgt dann wie in dem vorangegangenen ersten Ausführungsbeispiel. Das heißt, die einzelnen Rasterflächen auf dem Übersichtsschild werden durch den Cursor aktiviert, das jeweilig dazugehörende Detailbild wird in den Rechner geladen. Werden Grenzflächen aktiviert, werden die beiden Bilder geladen und automatisch vereinigt. Wird der Mittelpunkt von vier aneinander stoßenden Flächen aktiviert, werden alle vier Detailbilder geladen und später auch automatisch getrennt und wieder unter ihrem speziellen Namen einzeln abgespeichert. Damit erfolgt dann die weitere Vorgehensweise wie im ersten Ausführungsbeispiel, das heißt, daß ein großer Verwaltungskomplex durch die Unterteilung in die einzelnen Detailrasterzeichnungen effektiv von der vorgegebenen Rechnerklasse verwaltet werden kann.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zur Verwaltung und Bearbeitung von Plänen, Zeichnungen und Karten wie Stadtplänen, Landkarten, Leitungsnetzplänen etc, wobei die Informationen in digitalisierter Form vorliegen, dadurch gekennzeichnet, daß
- ein schematisches Gesamtbild mit wenigen ausgewählten Überblicksinformationen erstellt wird,
- dieses schematische Gesamtbild in ein Raster eingeteilt wird,
- die zu den Flächenraster gehörenden Detailinformationen nur über einen Namen des Rasters verknüpft und als Einzelbilder separat mit allen logischen und grafischen Verknüpfungen abgespeichert werden,
- im Einzelbild, das durch Auswahl im Raster aufgerufen wird, unabhängig vom übergeordneten Raster durch Aufruf und Verbinden benachbarter Bilder nacheinander Elemente und Objekte im gesamten sichtbaren Bereich verfolgt und bearbeitet werden, ohne daß die Übersichtskarte herangezogen werden muß und
- die bearbeiteten und gegebenenfalls zusammengesetzten Einzelbilder wieder mit allen logischen und grafischen Verknüpfungen getrennt und abgespeichert werden.

2. Verfahren nach Anspruch 1,
dadurch gekennzeichnet,
daß mehrere aneinandergrenzende Einzelbilder zum Bearbeiten automatisch miteinander verbunden und zum Abspeichern automatisch voneinander wieder getrennt und entsprechend dem Raster als Einzelbilder gespeichert werden.

3. Verfahren nach Anspruch 1,
dadurch gekennzeichnet,
daß zur Ersterstellung eines schematischen Gesamtbildes die durch das Raster gebildeten noch leeren Einzelbilder vorab mit einem Namenskodex versehen und abgespeichert und später durch die vollständigen Einzelbilder ersetzt werden.

4. Verfahren nach mindestens einem der Ansprüche 1 bis 3,
dadurch gekennzeichnet,
daß die Überblicks- und/oder Detailinformationen mit Attributen versehen werden derart, daß über diese Kennung ein eindeutiges Trennen und wieder Zusammensetzen von Rasterflächen gewährleistet wird.

5. Verfahren nach Anspruch 1,
dadurch gekennzeichnet,
daß an Stelle des schematischen Gesamtbildes ein Bild mit vollständigem Informationsgehalt automatisch in ein vorgegebenes Rastermuster geteilt und die Rasterbilder getrennt gekennzeichnet abgespeichert werden.
